# EUROPÄISCHE PATENTSCHRIFT

(11) **EP 2 150 943 B1**
(45) Veröffentlichungstag und Bekanntmachung des Hinweises auf die Patenterteilung: **02.01.2013**
(21) Anmeldenummer: 08736180.4
(22) Anmeldetag: 14.04.2008
(51) Int. Cl.: G07F 7/08, G07F 7/10, G06Q 20/00, G01N 27/414, G06K 7/00

(54) **VERFAHREN ZUR INBENUTZUNGNAHME EINER CHIPKARTE**
METHOD FOR THE INITIAL USE OF A CHIP CARD
PROCÉDÉ D'UTILISATION INITIALE D'UNE CARTE À PUCE

(30) Priorität: 25.04.2007 DE 102007019839
(43) Veröffentlichungstag der Anmeldung: 10.02.2010
(73) Patentinhaber: Bundesdruckerei GmbH, 10958 Berlin (DE)
(72) Erfinder: WEISS, Niklas, 12489 Berlin (DE)
(74) Vertreter: Richardt Patentanwälte GbR
(86) Internationale Anmeldenummer: PCT/EP2008/054477
(87) Internationale Veröffentlichungsnummer: WO 2008/132040

(56) Entgegenhaltungen:
- EP-B2- 1 208 539
- DE-A1- 10 255 755
- DE-A1- 19 648 767
- DE-A1- 19 850 307
- US-A1- 2003 080 852
- US-B1- 6 325 285
- NIST/BIOMETRIC CONSORTIUM: "Biometric Application Programming Interface (API) for Java Card(TM)"[Online] 2002, Seiten 1-16, XP002491318 Gefunden im Internet: URL:http://www.javacardforum.org/03_docume nts/00_documents/fileload_06.pdf> [gefunden am 2008-08-06]

## Beschreibung

Die Erfindung betrifft ein Verfahren zur Inbenutzungnahme einer Chipkarte und eine Chipkarte.

Für die Freischaltung einer Chipkarten-Funktion kann eine zuvorige Benutzeridentifizierung gegenüber der Chipkarte erforderlich sein, wie es aus dem Stand der Technik an sich bekannt ist. Die häufigste Benutzeridentifizierung ist die Eingabe einer geheimen Kennung, welche im Allgemeinen als PIN (Personal Identification Number) oder als CHV (Card Holder Verification) bezeichnet wird. Solche Kennungen bestehen im Allgemeinen aus einer numerischen oder alphanumerischen Zeichenkette. Zur Benutzeridentifizierung wird die Kennung von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene Kennung mit der gespeicherten Kennung und teilt dann das Ergebnis dem Terminal bzw. dem Computer durch Ausgabe eines entsprechenden Signals mit.

US 2001/080852 A1 betrifft ein Verfahren zum Freischalten einer Chipkarte. Hierzu muss zuerst ein Benutzer eine PIN in seine Chipkarte eingeben, woraufhin anschließend diese PIN gespeichert wird. Zur Verwendung der Chipkarte muss der Benutzer wiederum dieselbe PIN in die Chipkarte eingeben, die Chipkarte überprüft ob die neu eingegeben PIN mit der zuvor eingegebenen PIN übereinstimmt, um daraufhin eine Chipkartenfunktion freizuschalten.

Bei den PINs kann zwischen statischen und änderbaren Pins unterschieden werden. Eine statische PIN ist vom Benutzer nicht mehr veränderbar und muss von diesem auswendig gelernt werden. Ist sie bekannt geworden, dann muss der Kartenbenutzer seine Chipkarte zerstören, um Missbrauch durch Unbefugte zu unterbinden, und sich eine neue Chipkarte mit einer anderen statischen PIN besorgen. Ebenso braucht der Benutzer eine neue Chipkarte, wenn er oder sie die statische PIN vergessen hat. Eine änderbare PIN kann vom Benutzer nach Belieben geändert werden. Zum Ändern der PIN ist es aus Sicherheitsgründen immer notwendig, die aktuell gültige PIN mit zu übergeben, da sonst jede bestehende PIN durch einen Angreifer mit seiner eigenen ersetzt werden könnte.

Anders verhält es sich mit den so genannten Super-PINs oder PUKs (Personal Unlocking Key). Diese haben in der Regel mehr Stellen als die eigentliche PIN, und werden dazu benutzt, einen auf seinem Minimalwert stehenden Fehleingabezähler (wird auch als "Fehlbedienungszähler" bezeichnet) einer PIN wieder auf seinen initialen Maximalwert zurückzusetzen. Mit der PUK wird auch gleich eine neue PIN an die Chipkarte übergeben, weil ein zurückgesetzter Fehlbedienungszähler wenig nützt, wenn man die PIN vergessen hat. Und dies ist ja meist der Fall, wenn der Fehlbedienungszähler seinen Maximalwert erreicht hat. Für Chipkarten im Umfeld des Signaturgesetzes ist die Verwendung bzw. Anwendung von Super-PINs oder PUKs jedoch aus Sicherheitsgründen darauf beschränkt, dass lediglich der Fehlbedienungszähler zurückgesetzt wird. Eine neue PIN wird nicht übergeben. Hier muss eine neue Chipkarte beantragt werden, wenn die PIN vergessen wurde.

Es gibt auch Anwendungen, die Transport-PINs verwenden. Die Chipkarte wird mit einer zufälligen PIN personalisiert, welche der Kartenbenutzer in einem PIN-Brief erhält. Bei der ersten Eingabe wird er aber von der Chipkarte dazu aufgefordert, die personalisierte PIN durch seine eigene zu ersetzen. Bei einem ähnlichen Verfahren, "Null-PIN-Verfahren" genannt, wird die Chipkarte mit einer Trivial-PIN, wie etwa "0000" vorbelegt, und es wird ebenfalls von der Chipkarte bei der ersten Benutzung ein Wechsel erzwungen (vgl. hierzu auch DE 35 23 237 A1, DE 195 07 043 A1, DE 195 07 044 C2, DE 198 50 307 C2, EP 0 730 253 B1).

Aus der DE 198 50 307 C2 ist ein Verfahren zum Schutz vor Missbrauch bei Chipkarten bekannt. Die Chipkarte hat eine Erstnutzerfunktion, die bei der erstmaligen Benutzung der Daten und/oder Funktionen der Chipkarte die Vorgabe einer vom Benutzer beliebig wählbaren, persönlichen Geheimzahl (PIN) fordert, wobei durch die Eingabe der persönlichen Geheimzahl Daten und/oder Funktionen der Chipkarte automatisch in einen Benutzt-Status gesetzt werden. Eine spätere Änderung der persönlichen Geheimzahl wird durch einen übergeordneten Entsperrcode ermöglicht.

Chipkarten mit änderbarer PIN haben zwar gegenüber Chipkarten mit einer statischen PIN den Vorteil, dass die Chipkarte unter Umständen nicht durch eine neue ersetzt werden muss, wenn der Benutzer die PIN vergessen hat, beispielsweise in dem mit Hilfe der PUK der Fehlbedienungszähler zurückgesetzt und eine neue PIN eingegeben wird. Dieses bietet den weiteren Vorteil, dass der Anwender die PIN auf einen Wert setzen kann, der sich für den Anwender leicht merken lässt. Allerdings ist eine solche Vorgehensweise für sicherheitskritische Anwendungen, insbesondere für die Vornahme von digitalen Signaturen und im Zahlungsverkehr aufgrund der eingeschränkten Sicherheit gegen Manipulationen nicht akzeptabel. Daher wird bei Anwendungen, die eine sehr hohe Sicherheit erfordern, eine Neueingabe der PIN mittel PUK in der Regel nicht erlaubt. Dies bedeutet, dass lediglich das Rücksetzen des Fehlbedienungszählers mit der PUK erlaubt ist. Der Nachteil ist hier wiederum, dass bei Vergessen der PIN die Chipkarte ersetzt werden muss.

Nach der zum Anmeldezeitpunkt unveröffentlichten DE 10 2007 008 652 derselben Anmelderin wird eine Erstnutzerfunktion der Chipkarte so ausgebildet, dass die Erstnutzerfunktion nach vorheriger Verwendung durch den Benutzer von ihrem Benutzt-Status rücksetzbar ist. Diese Rücksetzung von dem Benutzt-Status in den Erstbenutzungsstatus erfolgt auf eine sichere Art und Weise, nämlich durch Eingabe eines Codes. Die Rücksetzbarkeit der Erstnutzerfunktion in den Erstbenutzungsstatus nach vorheriger Benutzung ermöglicht die erneute Wahl einer Kennung zum Freischalten der Chipkartenfunktion, wenn der Benutzer beispielsweise die zunächst gewählte Kennung vergessen hat.

Nach der zum Anmeldezeitpunkt unveröffentlichten DE 10 2007 008 651 derselben Anmelderin wird eine Chipkarte geschaffen, in der zumindest zwei geheime Kennungen, beispielsweise zwei PINs, zum Schutz derselben Chipkarten-Funktion gespeichert sind. Dem berechtigten Benutzer der Chipkarte wird von dem Herausgeber der Chipkarte zunächst nur eine der Kennungen mitgeteilt. Wenn der Benutzer diese Kennung vergisst, so kann er eine Anforderung an den Herausgeber der Chipkarte richten, um von dort die zweite auf seiner Chipkarte gespeicherte Kennung zu erhalten.

Demgegenüber liegt der Erfindung die Aufgabe zugrunde, ein weiteres Verfahren zur Inbenutzungnahme einer Chipkarte und eine Chipkarte zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach einer Ausführungsform der Erfindung wird ein Verfahren zur Inbenutzungnahme einer Chipkarte geschaffen, wobei die Chipkarte einen Erstbenutzungsstatus und einen Benutztstatus einnehmen kann. Ein Übergang von dem Erstbenutzungsstatus in den Benutztstatus ist irreversibel, wobei eine Freischaltung einer Chipkartenfunktion der Chipkarte nur in dem Benutztstatus möglich ist. Das Verfahren zur Inbenutzungnahme der Chipkarte beinhaltet die folgenden Schritte: Eingabe von Identifizierungsdaten in die Chipkarte, Speicherung der Identifizierungsdaten in der Chipkarte, Eingabe eines Kommandos in die Chipkarte zur Auslösung eines Übergangs von dem Erstbenutzungsstatus in den Benutztstatus, wobei in der Chipkarte gespeicherten Identifizierungsdaten änderbar sind, wenn sich die Chipkarte in dem Erstbenutzungsstatus befindet.

Insbesondere kann die Eingabe der Identifizierungsdaten in die Chipkarte ohne vorherige Benutzeridentifikation und/oder Authentifizierung erfolgen. Ebenso können die gespeicherten Identifizierungsdaten ohne Benutzeridentifikation und/oder Authentifizierung änderbar sein, solange sich die Chipkarte noch in dem Erstbenutzungsstatus befindet.

Erfindungsgemäß werden hier unter "Identifizierungsdaten" jegliche Daten verstanden, die sich zur Benutzeridentifizierung gegenüber der Chipkarte eignen, wie zum Beispiel eine PIN, CHV und/oder biometrische Daten.

Unter "Freischaltung einer Chipkartenfunktion" wird hier die Ermöglichung der Nutzung der betreffenden Chipkartenfunktion verstanden, nachdem zutreffende Identifizierungsdaten gegenüber der Chipkarte nachgewiesen worden sind, die zutreffenden Identifizierungsdaten also z.B. über die Tastatur eines Chipkartenterminals oder eines Computers eingegeben worden sind.

Nach Ausführungsformen der Erfindung kann es sich bei der Chipkartenfunktion zum Beispiel um eine kryptographische Funktion zum Verschlüsseln und/oder Entschlüsseln von Daten, zur Generierung einer digitalen Signatur, eine Bezahlfunktion, eine Schlüsselfunktion oder dergleichen handeln. Durch eine erfindungsgemäße Chipkarte können mehrere verschiedene solcher Chipkartenfunktionen zur Verfügung gestellt werden, denen jeweils separat ein Erstbenutzungsstatus oder Benutztstatus und entsprechende Identifizierungsdaten zugeordnet sein können.
Die vorliegende Erfindung ist insbesondere deshalb besonders vorteilhaft, da sie eine Eingabe von Identifizierungsdaten und deren Speicherung in der Chipkarte als Referenzdaten ermöglicht, ohne dass dabei die Chipkarte zwangsläufig von dem Erstbenutzungsstatus in den Benutztstatus übergeht, wie dies zum Beispiel bei der DE 198 50 307 C2 der Fall ist. Der Übergang vom Erstbenutzungsstatus in den Benutztstatus erfolgt nur aufgrund der Eingabe eines gesonderten Kommandos in die Chipkarte zur Auslösung dieses Übergangs. Ein versehentlicher oder unbeabsichtigter Übergang von dem Erstbenutzungsstatus in den Benutztstatus durch die Eingabe von Identifizierungsdaten in die Chipkarte durch einen Benutzer kann hier also nicht stattfinden.

Beispielsweise ist also der Erstbenutzungsstatus der Chipkarte so definiert, dass eine Freischaltung der entsprechenden Chipkartenfunktion der Chipkarte nicht möglich ist, so lange sich die Chipkarte in dem Erstbenutzungsstatus befindet, wohingegen die Eingabe und Speicherung von Identifizierungsdaten als Referenzdaten für eine spätere Benutzeridentifizierung sowie auch die Eingabe von geänderten und die Speicherung von geänderten Identifizierungsdaten zum Überschreiben von vorher gespeicherten Referenzdaten auch ohne vorherige Identifizierung und/oder Authentifizierung möglich ist.

Der Benutztstatus kann dagegen so definiert sein, dass eine Änderung der in dem Speicher der Chipkarte als Referenzdaten gespeicherten Identifizierungsdaten nicht oder nicht ohne Benutzeridentifizierung und/oder Authentifizierung möglich ist, eine Freischaltung der Chipkartenfunktion durch Eingabe einer zutreffenden Benutzeridentifizierung, die mit den gespeicherten Referenzdaten übereinstimmt, aber möglich ist. Die gespeicherten Referenzdaten, z.B. die PIN, müssen nicht unbedingt auf der Chipkarte vollständig abgelegt sein. Die Referenzdaten können auch als Prüfsumme oder HASH-Wert abgelegt sein.

Nach einer Ausführungsform der Erfindung ist der Benutztstatus so definiert, dass eine Änderung der als Referenzdaten in dem Speicher der Chipkarte gespeicherten Identifizierungsdaten nur möglich ist, wenn zuvor eine erfolgreiche Benutzeridentifizierung stattgefunden hat, d.h. nach Eingabe der gespeicherten Identifizierungsdaten. Zur Änderung beispielsweise seiner PIN muss also der Benutzer in dem Benutztstatus zunächst seine zuvor gewählte PIN eingeben, und erst danach kann eine neue PIN gewählt werden.

Nach einer Ausführungsform der Erfindung wird der Übergang von dem Erstbenutzungsstatus in den Benutztstatus aufgrund der Eingabe des Kommandos durch ein Betriebssystem der Chipkarte vollzogen. Beispielsweise unterstützt das Betriebssystem so genannte Objekte, insbesondere PIN-Objekte, wobei zu jedem Objekt eine Chipkartenfunktion gehört.

Nach Ausführungsformen der Erfindung kann der Benutzer das Kommando zur Auslösung des Übergangs vom dem Erstbenutzungsstatus in den Benutztstatus der betreffenden Chipkartenfunktion über eine Tastatur eingeben, wie zum Beispiel eine Tastatur der Chipkarte selbst, eines Chipkartenlesegeräts, insbesondere eines sog. Klasse 2 oder 3 Chipkartenterminals, oder eines Computers, der über ein Chipkartenlesegerät verfügt. Das Kommando kann auch z.B. über eine graphische Nutzerschnittstelle z.B. des Computers eingegeben werden. Das Kommando kann im Klartext oder als Chipkartenkommando eines vorgegebenen Befehlssatzes eingegeben werden.

Nach einer Ausführungsform der Erfindung der Erfindung hat die Chipkarte ein Bedienelement. Durch Betätigung dieses Bedienelements kann der Benutzer das Kommando zur Auslösung des Übergangs vom dem Erstbenutzungsstatus in den Benutztstatus bezüglich der Chipkarte insgesamt oder einer zuvor z.B. über die Tastatur oder die graphische Nutzerschnittstelle des Computers spezifizierte Chipkartenfunktion eingeben. Bei dem Bedienelement kann es sich um ein einzelnes Bedienelement handeln, wie z.B. einen einzelnen Knopf zur Betätigung durch den Benutzer.

In dem Erstbenutzungsstatus einer Chipkartenfunktion befindet sich das betreffende Objekt in einem deaktivierten Zustand, in dem eine Freischaltung dieser Chipkarten-funktion nicht erfolgen kann. Der Übergang in den Benutztstatus wird so von dem Betriebssystem vollzogen, dass das Objekt in einen aktivierten Zustand überführt wird. Zur Aktivierung des betreffenden Objekts wird von dem Betriebssystem eine definierte Aktion ausgeführt, wobei die Ausführung dieser Aktion durch den Empfang des Kommandos für den Übergang von dem Erstbenutzungsstatus in den Benutztstatus ausgelöst wird. Beispielsweise wird mit dem Kommando ein Schlüssel, wie zum Beispiel eine Transport-PIN, übergeben, mit Hilfe dessen ein zu dem betreffenden Objekt gehörender Fehlbedienungs-Zähler initialisiert wird. Bei noch deaktivierten Objekten ist der Schlüssel jedoch nicht nutzbar und die PIN beliebig änderbar, wogegen bei aktivierten Objekten der Schlüssel nutzbar, aber die PIN nicht oder nur nach Identifizierung änderbar ist.

Alternativ oder zusätzlich kann das Betriebssystem auch Lifecycle-gebundene Zugriffsregeln unterstützen. Je nach der Ausführungsform der Chipkarte können sich entweder die gesamte Chipkarte oder einzelne Objekte der Chipkarte in verschiedenen Phasen eines Lifecycles befinden. Das Chipkarten-Betriebssystem kann ein Weiterschalten der Phasen des Lifecycles irreversibel ermöglichen, wobei dann für jedes Objekt in Form von Zugriffsregeln festgelegt werden kann, in welcher Phase des Lifecycles welche Kommandos erlaubt sind. Wenn die Chipkarte solche Lifecycle-gebundenen Zugriffsregeln unterstützt, dann kann man zum Beispiel festlegen, dass eine PIN im Status "Pre-Issuance", d.h. im Erstbenutzungsstatus, beliebig geändert werden kann, aber nicht zum Freischalten eines Signaturschlüssels benutzt werden kann. Außerdem ist ein Umschalten in den Zustand "Post-Issuance", d.h. in den Benutztstatus, jederzeit erlaubt. Für den Zustand "Post-Issuance" kann festgelegt sein, dass die PIN nach Eingabe der alten PIN geändert werden darf, und ferner, dass die PIN den Signaturschlüssel freischalten kann. Der Übergang von dem Pre-Issuance in den Post-Issuance-Zustand ist irreversibel, was durch das Betriebssystem der Chipkarte sichergestellt wird.

Nach einer Ausführungsform der Erfindung beinhalten die Identifizierungsdaten biometrische Daten. Bei den biometrischen Daten kann es sich beispielsweise um Fingerabdruckdaten, Iris-Scan-Daten oder andere biometrische Daten handeln, wie zum Beispiel die Ergebnisse einer DNA-Analyse eines Tropfens Körperflüssigkeit des Benutzers der Chipkarte. Für die Erfassung der biometrischen Daten kann die Chipkarte einen entsprechenden Sensor aufweisen, wie zum Beispiel einen Fingerabdruck-Sensor, eine elektronische Kamera, wie zum Beispiel einen CCD-Sensor und/oder einen so genannten Bio-Chip für die Durchführung der DNA-Analyse. Geeignete Bio-Chips sind an sich aus dem Stand der Technik bekannt, vergleiche hierzu beispielsweise DE 102 55 755. Ein solcher Sensor kann einen integralen Bestandteil der Chipkarte bilden, oder als externer Sensor mit der Chipkarte koppelbar sein.

Nach einer Ausführungsform der Erfindung wird nach der Erfassung der biometrischen Daten anhand einer vorgegebenen Metrik ein Qualitätswert ermittelt, welcher die Qualität der erfassten biometrischen Daten angibt. Für das biometrische Merkmal "Fingerabdruck" stellt beispielsweise die Hautfeuchtigkeit einen Qualitätsfaktor für die Erfassung der Fingerabdruckdaten dar, wie es an sich beispielsweise aus der EP 1 208 539 B2 bekannt ist. Die Hautfeuchtigkeit kann über denselben Sensor oder einen weiteren Sensor der Chipkarte erfasst werden.

Nach einer Ausführungsform der Erfindung wird der ermittelte Qualitätswert von der Chipkarte ausgegeben. Beispielsweise wird der Qualitätswert über einen Chipkarten-Leser an einen Computer, beispielsweise den PC des Benutzers, ausgegeben. Dort wird der Qualitätswert mit einem vorgegebenen Kriterium verglichen, beispielsweise mit einem Schwellwert. Wenn die Qualität der Erfassung der biometrischen Daten als nicht ausreichend erkannt wird, so wird der Benutzer zur erneuten Erfassung der biometrischen Daten aufgefordert.

Der Vergleich des ermittelten Qualitätswerts mit einem vorgegebenen Kriterium kann aber auch durch die Chipkarte selbst vorgenommen werden. In diesem Fall gibt die Chipkarte ein Signal, zum Beispiel über die Chipkarten-Schnittstelle aus, welches anzeigt, dass die Qualität der Datenerfassung ausreichend oder nicht ausreichend war, um den Benutzer erforderlichenfalls zu einer erneuten Erfassung der biometrischen Daten zu veranlassen.

Die verschiedenen Ausführungsformen der Erfindung sind beliebig miteinander kombinierbar. Beispielsweise können einzelne oder mehrere Ausführungsformen miteinander kombiniert werden.

In einem weiteren Aspekt betrifft die Erfindung eine Chipkarte mit Mitteln zur Eingabe und Speicherung von Identifizierungsdaten und geänderten Identifizierungsdaten in dem Erstbenutzungsstatus, Mitteln zum Empfang eines Kommandos zur Auslösung eines irreversiblen Übergangs von dem Erstbenutzungsstatus in den Benutztstatus, wobei die Chipkartenfunktion nur freischaltbar ist, wenn der Status der Benutztstatus ist.

Nach einer Ausführungsform der Erfindung hat die Chipkarte zumindest einen biometrischen Sensor zur Erfassung biometrischer Daten als Referenzdaten für die Benutzeridentifizierung. Die Erfassung der biometrischen Daten und der Speicherung als Referenzdaten in der Chipkarte erfolgt in dem Erstbenutzungsstatus der betreffenden Chipkartenfunktion, die durch die Referenzdaten gesichert werden soll. So lange der Erstbenutzungsstatus gültig ist, können die biometrischen Daten ein oder mehrfach erneut erfasst und in der Chipkarte gespeichert werden, wobei beispielsweise die zuvor erfassten und gespeicherten Referenzdaten jeweils überschrieben werden.

Es erfolgt also kein automatischer Übergang von dem Erstbenutzungsstatus in den Benutztstatus aufgrund der Eingabe, d.h. der Erfassung, der biometrischen Daten und deren Speicherung als Referenzdaten. Vielmehr ist für diesen Übergang der Empfang eines separaten Kommandos durch die Chipkarte zum Beispiel von einem PC des Benutzers erforderlich, durch das der Übergang von dem Erstbenutzungsstatus in den Benutztstatus ausgelöst wird.
Nach einer Ausführungsform der Erfindung wird durch die Chipkarte ein Qualitätswert für die erfassten biometrischen Daten ermittelt. Dieser Qualitätswert kann mit einem vorgegebenen Qualitätskriterium verglichen werden. Dieser Vergleich kann durch die Chipkarte oder durch ein mit der Chipkarte kommunizierendes externes Geräts, wie zum Beispiel den PC des Benutzers, erfolgen.

Nach einer Ausführungsform der Erfindung hat die Chipkarte eine Benutzer-Schnittstelle, wie zum Beispiel eine Anzeigevorrichtung (Display), über die eine Ausgabe des ermittelten Qualitätswerts erfolgt. Alternativ oder zusätzlich kann über das Display auch ausgegeben werden, ob der ermittelte Qualitätswert das vorgegebene Qualitätskriterium erfüllt oder nicht, und ob dementsprechend eine erneute Erfassung der biometrischen Daten erforderlich ist oder nicht.

Nach einer Ausführungsform der Erfindung hat die Chipkarte ein Eingabeelement, welches durch den Benutzer der Chipkarte betätigbar ist, um damit das Kommando einzugeben, um die Chipkarte von dem Erstbenutzungsstatus in den Benutztstatus zu überführen. Bei dem Eingabeelement kann es sich zum Beispiel um einen Druckknopf handeln, der für eine bestimmte Zeitdauer gedrückt werden muss und/oder über den ein bestimmter Code einzugeben ist, um den Statusübergang von dem Erstbenutzungsstatus in den Benutztstatus zu initiieren.

Im Weiteren werden Ausführungsformen der Erfindung mit Bezugnahme auf die Zeichnungen näher erläutert. Es zeigen:
- Figur 1: ein Blockdiagramm einer ersten Ausführungsform einer erfindungsgemäßen Chipkarte,
- Figur 2: ein Flussdiagramm einer ersten Ausführungsform eines erfindungsgemäßen Verfahrens,
- Figur 3: eine Blockdiagramm einer zweiten Ausführungsform einer erfindungsgemäßen Chipkarte,
- Figur 4: ein Flussdiagramm einer zweiten Ausführungsform eines erfindungsgemäßen Verfahrens.

Elemente der nachfolgenden Figuren, die einander entsprechen, sind mit denselben Bezugszeichen gekennzeichnet.

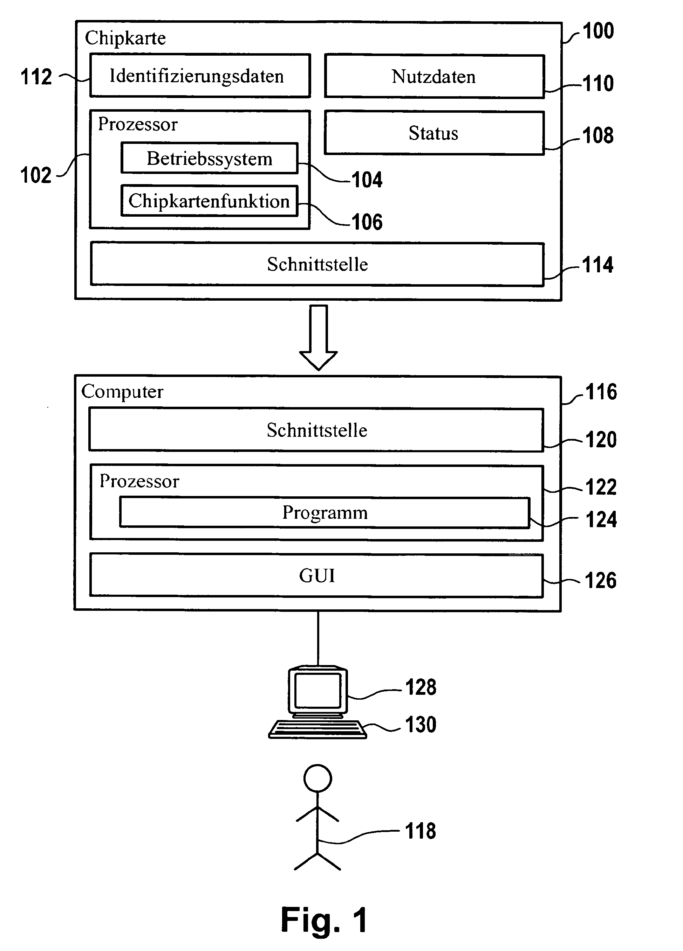

Die Figur 1 zeigt eine Chipkarte 100 mit einem Prozessor 102 zur Ausführung der Programminstruktionen eines Chipkarten-Betriebssystems 104 und der Programminstruktionen einer Chipkartenfunktion 106. Bei der Chipkartenfunktion 106 kann es sich zum Beispiel um eine kryptographische Funktion zum Verschlüsseln und/oder Entschlüsseln von Daten, zur Generierung einer digitalen Signatur, eine Bezahlfunktion, eine Schlüsselfunktion oder dergleichen handeln. Durch die Chipkarte 100 können mehrere verschiedene solcher Chipkartenfunktionen zur Verfügung gestellt werden, wobei hier nur die Chipkartenfunktion 106 exemplarisch gezeigt ist.

Der Chipkartenfunktion 106 oder der gesamten Chipkarte 100 ist ein Status zugeordnet, der in einem Register 108 gespeichert ist. Die Chipkartenfunktion 106 bzw. die Chipkarte 100 hat nur zwei mögliche Stati, nämlich den Erstbenutzungsstatus und den Benutztstatus. So lange sich die Chipkarte 100 bzw. die Chipkartenfunktion 106 in deren Erstbenutzungsstatus befindet, kann ein Benutzer sicher sein, dass die Chipkarte 100 bzw. die Chipkartenfunktion 106 zuvor nicht von einem unautorisierten Benutzer bereits benutzt worden ist. Dies ist insbesondere dadurch sichergestellt, dass eine Freischaltung der Chipkartenfunktion 106 grundsätzlich nicht möglich ist, so lange der Erstbenutzungsstatus in dem Register 108 gespeichert ist.

Durch das Betriebssystem 104 kann ein Übergang von dem Erstbenutzungsstatus in den Benutztstatus vollzogen werden, indem der Inhalt des Registers 108 entsprechend geändert wird. Beispielsweise ist für den Erstbenutzungsstatus eine logische Null in dem Register 108 gespeichert, wohingegen für den Benutztstatus eine logische Eins in dem Register 108 gespeichert ist. Der Übergang von dem Erstbenutzungsstatus in den Benutztstatus ist irreversibel und kann nur durch das Betriebssystem 104 vollzogen werden.

Die Chipkarte 100 hat einen Speicherbereich 110 zur Speicherung von Nutzdaten und einen geschützten Speicherbereich 112 zur Speicherung von Identifizierungsdaten. Bei den Identifizierungsdaten handelt es sich um Referenzdaten für die Benutzeridentifizierung, die zur Freischaltung der Chipkartenfunktion 106 erforderlich ist, wenn sich die Chipkarte 100 bzw. die Chipkartenfunktion 106 in dem Benutztstatus befindet.

Die Chipkarte 100 hat eine Chipkarten-Schnittstelle 114 zur Kommunikation mit einem Computer 116 eines Benutzers 118. Der Computer hat eine entsprechende Chipkarten-Schnittstelle 120, mindestens einen Prozessor 122 zur Ausführung zumindest eines Programms 124 und eine graphische Nutzerschnittstelle 126. An dem Computer 116 ist ein Bildschirm 128 und eine Eingabevorrichtung, wie zum Beispiel eine Tastatur 130, angeschlossen.

Über die Chipkarten-Schnittstellen 114, 120 können unter Umständen Nutzdaten in den Speicherbereich 110 geschrieben oder aus dem Speicherbereich 110 ausgelesen werden. Ein Auslesen der Identifizierungsdaten aus dem geschützten Speicherbereich 112 über die Chipkarten-Schnittstelte 114 ist dagegen grundsätzlich ausgeschlossen. Nur das Betriebssystem 104 kann chipkartenintern auf den geschützten Speicherbereich 112 zugreifen, um beispielsweise über die Schnittstelle 114 empfangene Daten zur Benutzeridentifizierung mit den als Referenzdaten in dem geschützten Speicherbereich 112 gespeicherten Identifizierungsdaten zu vergleichen, um bei hinreichender Übereinstimmung beispielsweise die Chipkarten-funktion 106 freizuschalten, wenn der Benutztstatus in dem Register 108 gespeichert ist.

In dem Auslieferungszustand der Chipkarte 100 ist der Erstbenutzungsstatus in dem Register 108 gespeichert. Zur Inbetriebnahme der Chipkarte 100 kann der Benutzer 118 die Chipkarte 100 in das Chipkarten-Lesegerät seines Computers 116 einführen, sodass die Chipkarte 100 und der Computer 116 über die Chipkarten-Schnittstellen 114, 120 miteinander kommunizieren können.

Das Programm 124 kann den Benutzer 118 dazu auffordern, Identifizierungsdaten über die Tastatur 130 einzugeben. Hierbei kann es sich beispielsweise um die Wahl einer so genannten PIN handeln. Nach Eingabe der von dem Benutzer 118 gewählten PIN über die Tastatur 130 in den Computer 116 wird die PIN von der Chipkarten-Schnittstelle 120 zu der Chipkarten-Schnittstelle 114 übertragen und von dem Betriebssystem 104 in den geschützten Speicherbereich 112 gespeichert.

Der Benutzer 118 kann nachfolgend eine neue PIN über die Tastatur 130 eingeben, die sodann ebenso von dem Computer 116 an die Chipkarte 110 übertragen wird, sodass sie von dem Betriebssystem 104 in den geschützten Speicherbereich 112 geschrieben wird. Dabei wird die zuvor gespeicherte PIN überschrieben, d.h. gelöscht.

Dieser Vorgang kann im Prinzip beliebig oft wiederholt werden, so lange bis der Benutzer 118 seine endgültige PIN gewählt und auswendig gelernt hat. Erst wenn der Benutzer 118 sicher ist, dass er die von ihm gewählte und eingegebene PIN auch wirklich auswendig gelernt hat, gibt er über die Tastatur 130 ein Kommando ein, welches von dem Computer 116 an die Chipkarte 100 übertragen wird, sodass das Betriebssystem 104 den Statusübergang von dem Erstbenutzungsstatus in den Benutztstatus vollzieht. Nach diesem Statusübergang ist eine weitere Änderung der Identifizierungsdaten, d.h. hier der PIN, nicht mehr oder nicht mehr ohne weiteres möglich.

Beispielsweise ist eine nachfolgende Änderung der PIN nur dann möglich, wenn zunächst von dem Benutzer 118 die ursprünglich gewählte und als Referenzdatum in dem geschützten Speicherbereich 112 gespeicherte PIN zu seiner Benutzeridentifizierung eingegeben worden ist.

Der Benutzer 118 kann beispielsweise so vorgehen, dass er zu einem ersten Zeitpunkt die von ihm gewählte PIN in den Computer 116 eingibt, sodass sie in der Chipkarte 100 gespeichert wird. Der Benutzer 118 wartet dann bis zu einem zweiten Zeitpunkt, der zum Beispiel einige Tage später liegen kann. Wenn der Benutzer 118 zu diesem zweiten Zeitpunkt die von ihm zuvor gewählte und eingegebene PIN noch nicht vergessen hat, so kann er relativ sicher sein, dass er diese PIN auch in Zukunft nicht vergessen wird. In diesem Fall gibt der Benutzer 118 das Kommando in den Computer 116 ein, sodass der Statusübergang vom Erstbenutzungsstatus in den Benutztstatus vollzogen wird. Im gegenteiligen Fall wählt der Benutzer eine neue PIN und geht bezüglich dieser neu gewählten PIN analog vor.

Dadurch, dass die Eingabe der Identifizierungsdaten und der Übergang von dem Erstbenutzungsstatus in den Benutztstatus unterschiedliche Eingaben von dem Benutzer verlangen, wird hier also sichergestellt, dass der Benutzer nicht durch eine unüberlegte, zum Beispiel in Eile gewählte PIN, an die er sich später nicht mehr erinnern kann, einen solchen Statusübergang automatisch veranlasst, wie das im Stand der Technik der Fall ist.

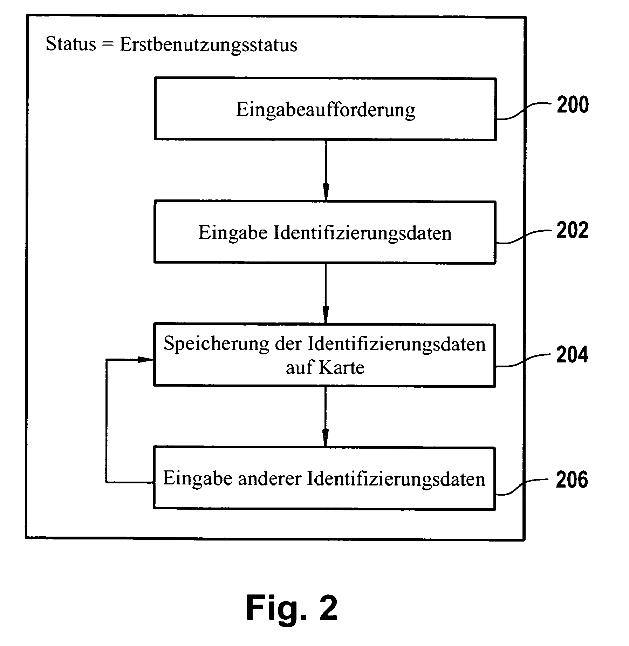

Die Figur 2 zeigt ein entsprechendes Flussdiagramm. In dem Schritt 200 wird der Benutzer der Chipkarte zur Eingabe von Identifizierungsdaten, wie zum Beispiel einer PIN, aufgefordert. In dem Schritt 202 erfolgt die Eingabe dieser Identifizierungsdaten. Die Speicherung der Identifizierungsdaten in einem geschützten Speicherbereich der Chipkarte erfolgt in dem nachfolgenden Schritt 204. In dem Schritt 206 kann der Benutzer andere Identifizierungsdaten in die Chipkarte eingeben, die in dem Schritt 204 wiederum gespeichert werden, wobei vorzugsweise die zuvor gespeicherten Identifizierungsdaten gelöscht werden. Die Schritte 204 bis 206 können im Prinzip beliebig oft wiederholt werden, so lange, bis der Benutzer der Chipkarte geeignete Identifizierungsdaten, wie zum Beispiel eine PIN, gefunden hat, die er nicht vergisst.

Die Schritte 200 bis 206 werden durchgeführt, so lange sich die Chipkarte bzw. die betreffende Chipkartenfunktion, die durch die Identifizierungsdaten geschützt werden soll, in dem Erstbenutzungsstatus befindet. Nachdem der Benutzer geeignete Identifizierungsdaten ausgewählt und in der Chipkarte gespeichert hat, erfolgt die Eingabe eines separaten Kommandos in die Chipkarte, aufgrund dessen der Übergang von dem Erstbenutzungsstatus in den Benutztstatus vollzogen wird.

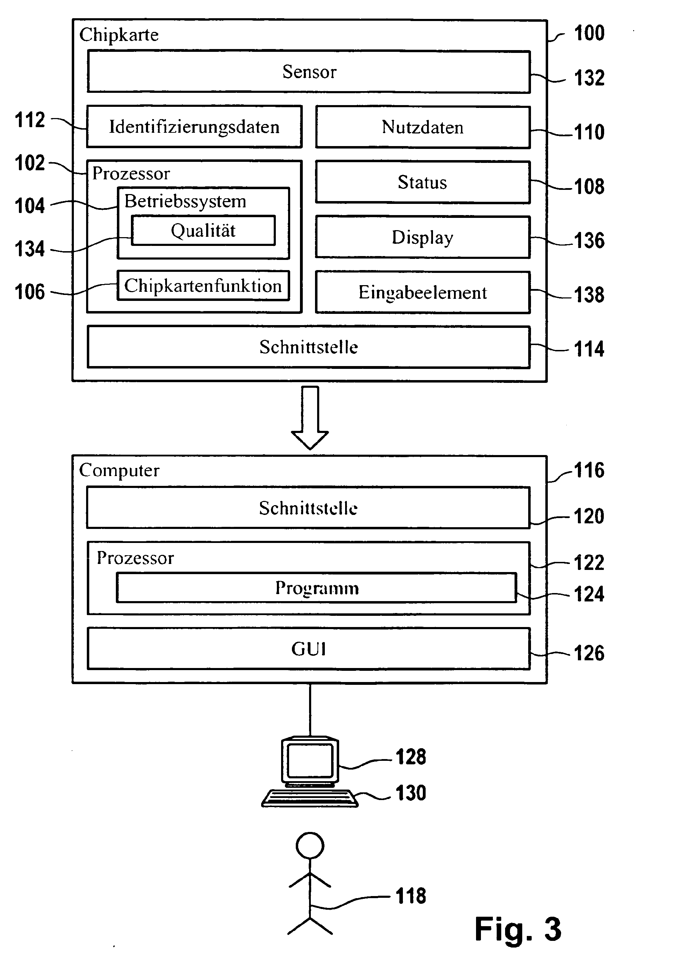

Die Figur 3 zeigt eine weitere Ausführungsform einer erfindungsgemäßen Chipkarte 100. Die Chipkarte 100 in der Ausführungsform der Fig. 3 hat einen zusätzlichen Sensor 132 zur Erfassung biometrischer Daten von dem Benutzer 118. Das Betriebssystem 104 beinhaltet ein Programmmodul 134 zur Ermittlung eines Qualitätswertes, der über den Sensor 132 erfassten biometrischen Daten, beispielsweise anhand einer vorgegebenen Qualitätsmetrik. Das Programmmodul 134 kann zusätzlich auch eine Bewertung des ermittelten Qualitätswertes vornehmen, indem beispielsweise der Qualitätswert mit einem vorgegebenen Schwellwert verglichen wird. Der Qualitätswert und/oder das Ergebnis des Vergleichs des Qualitätswerts mit dem Schwellwert kann über ein Display 136 der Chipkarte 100 über die Schnittstelle 114 an den Computer 116 ausgegeben werden.

Die Chipkarte 100 kann über ein Eingabeelement 138 verfügen, durch dessen Betätigung der Benutzer 118 das Kommando für den Übergang von dem Erstbenutzungsstatus in den Benutztstatus eingeben kann. Bei dem Eingabeelement 138 kann es sich um ein Ein-Knopf-Bedieneelement handeln. Beispielsweise muss der Benutzer das Eingabeelement 138 über eine bestimmte vorgegebene Zeitdauer herunterdrücken, um dieses Kommando für den Statusübergang einzugeben.

Das Eingabeelement 138 kann auch als Tastatur mit mehreren Bedienknöpfen ausgebildet sein, über die der Benutzer 118 zum Beispiel eine Transport-PIN eingeben kann, um so den Statusübergang zu veranlassen. Alternativ kann hierzu auch die Tastatur 130 des Computers 116 benutzt werden.

Zur Inbetriebnahme der Chipkarte in der Ausführungsform der Figur 3 wird beispielsweise wie folgt vorgegangen: Im Auslieferungszustand befindet sich die Chipkarte 100 bzw. die Chipkartenfunktion 106 in dem Erstbenutzungsstatus. Ein biometrisches Merkmal des Benutzers 108 wird mit Hilfe des Sensors 132 erfasst. Die daraus resultierenden biometrischen Daten werden in dem geschützten Speicherbereich 112 durch das Betriebssystem 104 gespeichert.

Das Betriebssystem 104 startet das Programmmodul 134, welches dann einen Qualitätswert für die in dem geschützten Speicherbereich 112 gespeicherten biometrischen Daten ermittelt. Dieser Qualitätswert kann mit einem Schwellwert verglichen werden. Der Qualitätswert und/oder das Ergebnis dieses Vergleichs können beispielsweise über das Display 136 der Chipkarte 100 ausgegeben werden und/oder über die Schnittstelle 114 an den Computer 116 kommuniziert werden, sodass die Ausgabe über den Bildschirm 128 erfolgt.

Je nach der Qualität der Erfassung der biometrischen Daten kann eine solche Erfassung erneut stattfinden, wobei die zuvor erfassten Daten in dem geschützten Speicherbereich 112 gelöscht werden. Erst nachdem der Benutzer 118 mit der Qualität der Erfassung der biometrischen Daten zufrieden ist, gibt er oder sie beispielsweise durch Betätigung des Eingabeelements 138 oder über die Tastatur 130 das Kommando zur Auslösung des Übergangs von dem Erstbenutzungsstatus in den Benutztstatus ein. Nach diesem Übergang ist eine Änderung der in dem geschützten Speicherbereich 112 gespeicherten biometrischen Daten nicht mehr oder nicht mehr ohne weiteres möglich.

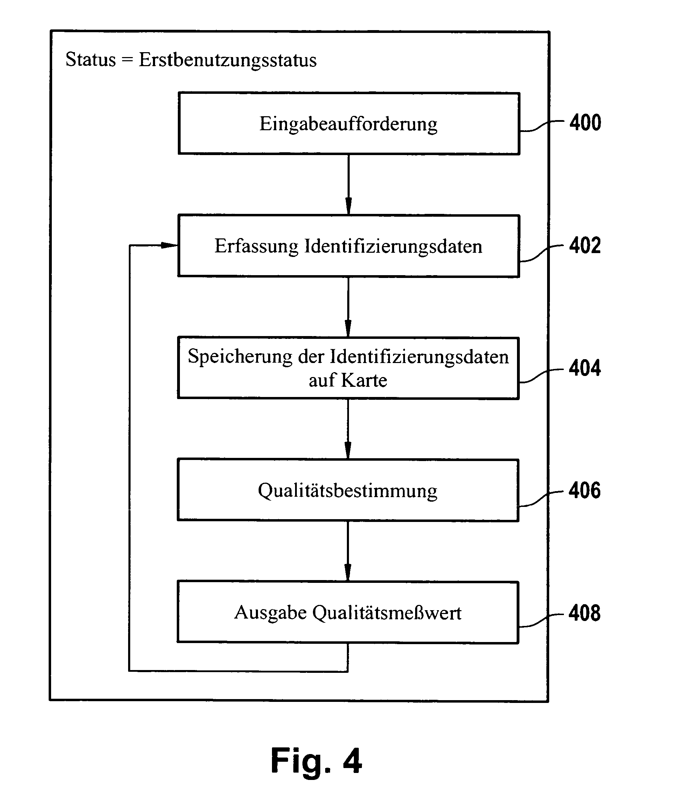

Die Figur 4 zeigt ein entsprechendes Flussdiagramm. In dem Schritt 400 wird der Benutzer zur Eingabe seiner Identifizierungsdaten aufgefordert, d.h. hier zur Erfassung seiner biometrischen Daten. Beispielsweise zur Erfassung seines Fingerabdrucks legt der Benutzer einen Finger auf den Fingerabdrucksensor der Chipkarte. In dem Schritt 402 werden die biometrischen Daten des Benutzers als Identifizierungsdaten erfasst und in dem nachfolgenden Schritt 404 in einem geschützten Speicherbereich der Chipkarte gespeichert. Die Chipkarte nimmt daraufhin eine Bestimmung der Qualität der erfassten biometrischen Daten vor (Schritt 406) und gibt in dem Schritt 408 einen Qualitätsmesswert aus. Auf der Basis dieses Qualitätsmesswertes kann der Benutzer entscheiden, ob er oder sie eine erneute Erfassung der biometrischen Daten wünscht. Dementsprechend können die Schritte 402 bis 408 ein oder mehrfach wiederholt werden, so lange sich die Chipkarte bzw. die durch die biometrischen Daten zu schützende Chipkartenfunktion in dem Erstbenutzungsstatus befindet.

### Bezugszeichenliste

- 100: Chipkarte
- 102: Prozessor
- 104: Betriebssystem
- 106: Chipkartenfunktion
- 108: Register
- 110: Speicherbereich
- 112: geschützter Speicherbereich
- 114: Chipkarten-Schnittstelle
- 116: Computer
- 118: Benutzer
- 120: Chipkarten-Schnittstelle
- 122: Prozessor
- 124: Programm
- 126: graphische Nutzerschnittstelle
- 128: Bildschirm
- 130: Tastatur
- 132: Sensor
- 134: Programmmodul
- 136: Display
- 138: Eingabeelement

## Patentansprüche

1. Verfahren zur Inbenutzungnahme einer Chipkarte (100), wobei die Chipkarte einen Erstbenutzungsstatus und einen Benutztstatus einnehmen kann, wobei ein Übergang von dem Erstbenutzungsstatus in den Benutztstatus irreversibel ist, und eine Freischaltung einer Chipkartenfunktion (106) der Chipkarte zur Ermöglichung der Nutzung der Chipkartenfunktion nur in dem Benutztstatus möglich ist, mit folgenden Schritten:
- Eingabe von Identfizierungsdaten (112, 202) in die Chipkarte im Erstbenutzungsstatus,
- Speicherung der Identifizierungsdaten (204) in der Chipkarte, wobei in der Chipkarte gespeicherten Identifizierungsdaten änderbar sind, wenn sich die Chipkarte in dem Erstbenutzungsstatus befindet
- Eingabe eines Kommandos in die Chipkarte zur Auslösung eines Übergangs von dem Erstbenutzungsstatus in den Benutztstatus,
**dadurch gekennzeichnet,**
- **dass** es sich bei den Identifizierungsdaten und dem Kommando um unterschiedliche Eingaben handelt,
- und **dass** die Eingabe der Identifizierungsdaten in die Chipkarte beliebig oft änderbar wiederholt werden kann, wenn sich die Chipkarte in dem Erstbenutzungsstatus befindet.

2. Verfahren nach Anspruch 1, wobei nach der Eingabe und Speicherung der Identifizierungsdaten eine erneute Eingabe und Speicherung von geänderten Identifizierungsdaten erfolgt, wobei die geänderten Identifizierungsdaten die zunächst eingegebenen und gespeicherten Identifizierungsdaten ersetzen.

3. Verfahren nach Anspruch 1 oder 2, wobei im Benutztstatus eine Eingabe und Speicherung geänderter Identifizierungsdaten nur möglich ist, wenn zuvor eine Benutzeridentifizierung erfolgt.

4. Verfahren nach Anspruch 1, 2 oder 3, wobei der Übergang von dem Erstbenutzungsstatus in den Benutztstatus durch ein Betriebssystem (104) der Chipkarte vollzogen wird.

5. Verfahren nach einem der vorhergehenden Ansprüche, wobei die Identifizierungsdaten biometrische Daten beinhalten, und wobei die Eingabe der Identifizierungsdaten durch Erfassung der biometrischen Daten mit Hilfe eines Sensors erfolgt.

6. Verfahren nach Anspruch 5, wobei die biometrischen Daten unmittelbar durch einen Sensor (132) der Chipkarte erfasst werden.

7. Verfahren nach Anspruch 5 oder 6, wobei für die biometrischen Daten ein Qualitätswert ermittelt wird, und wobei der Qualitätswert von der Chipkarte ausgegeben wird.

8. Verfahren nach Anspruch 7, wobei eine Bewertung des Qualitätswerts anhand eines vorgegebenen Qualitätskriteriums erfolgt.

9. Chipkarte (100) mit zumindest einer Chipkartenfunktion (106) und einem der Chipkartenfunktion zugeordneten Status (108), wobei der Status entweder ein Erstbenutzungsstatus oder ein Benutztstatus sein kann, mit
- Mitteln (104, 112, 114) zur Eingabe und Speicherung von Identifizierungsdaten und geänderten Identifizierungsdaten in dem Erstbenutzungsstatus,
- Mitteln (104, 112) zum Empfang eines Kommandos zur Auslösung eines irreversiblen Übergangs von dem Erstbenutzungsstatus in den Benutztstatus, wobei die Chipkartenfunktion nur freischaltbar zur Ermöglichung der Nutzung der Chipkartenfunktion ist, wenn der Status der Benutztstatus ist,
dadurch gekenntzeichnet
- dass sich das Kommando von den Identifizierungsdaten unterscheidet,
- und dass die Mittel (104, 112, 114) zur Eingabe und Speicherung von Identifizierungsdaten und geänderten Identifizierungsdaten dazu ausgebildet sind, beliebig oft die Eingabe und Speicherung der Identifizierungsdaten und / oder der geänderten Identfizierungsdaten, insbesondere von bei jeder Eingabe geänderte Identifizierungsdaten, zu ermöglichen, wenn sich die Chipkarte in dem Erstbenutzungsstatus befindet

10. Chipkarte nach Anspruch 9, mit einer Chipkarten-Schnittstelle (114) zum Empfang des Kommandos.

11. Chipkarte nach Anspruch 9 oder 10 mit einem Betriebssystem (104), wobei das Betriebssystem zur Ausführung des Kommandos für den irreversiblen Übergang von dem Erstbenutzungsstatus in den Benutztstatus ausgebildet ist.

12. Chipkarte nach Anspruch 9, 10 oder 11, mit einem Sensor (132) zur Erfassung biometrischer Daten eines Benutzers der Chipkarte, wobei die Identifizierungsdaten die biometrischen Daten beinhalten.

13. Chipkarte nach Anspruch 12, wobei der Sensor zur Erfassung von Fingerabdruckdaten, Iris-Scan-Daten oder DNA-Daten ausgebildet ist.

14. Chipkarte nach Anspruch 12 oder 13, mit Mitteln (134) zur Ermittlung eines Qualitätswertes der biometrischen Daten und zur Ausgabe des Qualitätswertes über eine Chipkarten-Schnittstelle (114).

## Claims

1. Method for activating a chip card (100), it being possible for the chip card to assume an initial-use state and a used state, a transition from the initial-use state to the used state being irreversible, and an unlocking of a chip card function (106) of the chip card for making it possible to use the chip card function only being possible in the used state, said method comprising the following steps:
- inputting identification data (112, 202) into the chip card in the initial-use state,
- storing the identification data (204) in the chip card, identification data stored in the chip card being able to be altered when the chip card is in the initial-use state,
- inputting a command into the chip card to trigger a transition from the initial-use state to the used state,
**characterised in that**
- the identification data and the command are different inputs,
- and **in that** the input of the identification data into the chip card can be repeated any number of times in an alterable manner when the chip card is in the initial-use state.

2. Method according to claim 1, wherein after inputting and storing the identification data, renewed inputting and storing of altered identification data takes place, the altered identification data replacing the identification data which was initially input and stored.

3. Method according to either claim 1 or claim 2, wherein, in the used state, it is only possible to input and store altered identification data when user identification has previously taken place.

4. Method according to claim 1, 2 or 3, wherein the transition from the initial-use state to the used state is executed by an operating system (104) of the chip card.

5. Method according to any of the preceding claims, wherein the identification data contain biometric data, and wherein the identification data is input by detecting the biometric data by means of a sensor.

6. Method according to claim 5, wherein the biometric data are detected directly by a sensor (132) of the chip card.

7. Method according to either claim 5 or claim 6, wherein a quality value is determined for the biometric data, and wherein the quality value is output by the chip card.

8. Method according to claim 7, wherein the quality value is evaluated with reference to a predetermined quality criterion.

9. Chip card (100) having at least one chip card function (106) and a state (108) assigned to the chip card function, it being possible for the state to be either an initial-use state or a used state, said chip card comprising
- means (104, 112, 114) for inputting and storing identification data and altered identification data in the initial-use state,
- means (104, 112) for receiving a command for triggering an irreversible transition from the initial-use state to the used state, it only being possible to unlock the chip card function for making it possible to use the chip card function when the state is the used state,
**characterised in that**
- the command differs from the identification data,
- and **in that** the means (104, 112, 114) for inputting and storing identification data and altered identification data are configured to make it possible to input and store the identification data and/or the altered identification data, in particular identification data altered at each input, any number of times when the chip card is in the initial-use state.

10. Chip card according to claim 9, comprising a chip card interface (114) for receiving the command.

11. Chip card according to either claim 9 or claim 10 comprising an operating system (104), wherein the operating system is configured to perform the command for the irreversible transition from the initial-use state to the used state.

12. Chip card according to claim 9, 10 or 11, comprising a sensor (132) for detecting biometric data of a user of the chip card, wherein the identification data contain the biometric data.

13. Chip card according to claim 12, wherein the sensor is configured to detect fingerprint data, iris scan data or DNA data.

14. Chip card according to either claim 12 or claim 13, comprising means (134) for determining a quality value of the biometric data and for outputting the quality value via a chip card interface (114).

## Revendications

1. Procédé de mise en service d'une carte à puce (100), dans lequel la carte à puce peut adopter un état de première mise en service et un état de service, dans lequel une transition de l'état de première mise en service à l'état de service est irréversible et un dégagement d'une fonction (106) de la carte à puce pour permettre l'utilisation de la fonction de la carte à puce ne peut se faire qu'à l'état de service, avec les étapes consistant à :
- saisir des données d'identification (112, 202) dans la carte à puce à l'état de première mise en service,
- mémoriser des données d'identification (204) dans la carte à puce, les données d'identification mémorisées dans la carte à puce pouvant être modifiées lorsque la carte à puce se trouve à l'état de première mise en service,
- saisir une commande dans la carte à puce pour déclencher une transition de l'état de première mise en service à l'état de service,
**caractérisé en ce que** :
- les données d'identification et la commande sont des données différentes, et
- la saisie des données d'identification dans la carte à puce peut être répétée et on peut les modifier aussi souvent que nécessaire.

2. Procédé selon la revendication 1, dans lequel, après saisie et mémorisation des données d'identification, on effectue une nouvelle saisie et une nouvelle mémorisation de données d'identification modifiées, les données d'identification modifiées remplaçant les données d'identification saisies et mémorisées en premier lieu.

3. Procédé selon la revendication 1 ou la revendication 2, dans lequel, à l'état de service, une saisie et une mémorisation de données d'identification modifiées ne sont possibles que s'il se fait tout d'abord une identification de l'utilisateur.

4. Procédé selon la revendication 1, 2 ou 3, dans lequel la transition de l'état de première mise en service à l'état de service est effectuée par un système d'exploitation (104) de la carte à puce.

5. Procédé selon l'une quelconque des revendications précédentes, dans lequel les données d'identification contiennent des données biométriques et dans lequel la saisie des données d'identification se fait par collecte des données biométriques à l'aide d'un capteur.

6. Procédé selon la revendication 5, dans lequel les données biométriques sont recueillies directement par un capteur (132) de la carte à puce.

7. Procédé selon la revendication 5 ou la revendication 6, dans lequel une valeur qualitative est déterminée pour les données biométriques et dans lequel la valeur qualitative est délivrée par la carte à puce.

8. Procédé selon la revendication 7, dans lequel une évaluation de la valeur qualitative se fait sur la base d'un critère de qualité prédéterminé.

9. Carte à puce (100) avec au moins un fonction (106) de carte à puce et un état (108) affecté à la fonction de la carte à puce, dans laquelle l'état peut être un état de première mise en service ou un état de service, comprenant :
- des moyens (104, 112, 114) pour saisir et mémoriser des données d'identification et des données d'identification modifiées à l'état de première mise en service,
- des moyens (104, 112) pour recevoir une commande afin de déclencher une transition irréversible de l'état de première mise en service à l'état de service, la fonction de la carte à puce n'étant dégagée pour permettre l'utilisation de la fonction de la carte à puce que lorsque l'état est l'état de service,
**caractérisée en ce que**
- la commande se distingue des données d'identification, et
- les moyens (104, 112, 114) pour la saisie et la mémorisation de données d'identification et de données d'identification modifiées sont conformés de manière à permettre, aussi souvent que nécessaire, la saisie et la mémorisation des données d'identification et/ou des données d'identification modifiées, en particulier de données d'identification modifiées à chaque saisie, lorsque la carte à puce se trouve à l'état de première mise en service.

10. Carte à puce selon la revendication 9, comprenant une interface de carte à puce (114) pour la réception de la commande.

11. Carte à puce selon la revendication 9 ou la revendication 10, comprenant un système d'exploitation (104), dans laquelle le système d'exploitation est conformé pour exécuter la commande pour la transition irréversible de l'état de première mise en service à l'état de service.

12. Carte à puce selon la revendication 9, 10 ou 11, comprenant un capteur (132) pour recueillir des données biométriques d'un utilisateur de la carte à puce, dans laquelle les données d'identification contiennent les données biométriques.

13. Carte à puce selon la revendication 12, dans laquelle le capteur est conformé pour recueillir des données d'empreintes de doigts, des données de balayage de l'iris ou des données d'ADN.

14. Carte à puce selon la revendication 12 ou la revendication 13, comprenant des moyens (134) pour déterminer une valeur qualitative des données biométriques et pour délivrer la valeur qualitative via une interface de carte à puce (114).
